# EUROPEAN PATENT APPLICATION

(11) **EP 2 043 273 A2**
(43) Date of publication of application: **01.04.2009**
(21) Application number: 09000238.7
(22) Date of filing: 07.12.2005
(51) Int. Cl.: H04B 1/707

(54) **Method for path selection and signal processing in wireless communications systems**

(30) Priority: 22.07.2005 US 187121
(62) Divisional of application: 05257535.4
(71) Applicant: Industrial Technology Research Institute, Taiwan Hsin chu (TW)
(72) Inventor: Chiou, Yu-shu, Taoyuan City Taoyuan County 330 (TW); Wang, Hui Ming, Wunshan District Taipei City 116 (TW); Kuo, Kao-Yueh, Hsinchu City 300 (TW); Yen, Jung-Yu, Sinjhuang City Taipei County 242 (TW)
(74) Representative: Nicholls, Michael John

(57) **Abstract**

A method of finger assignment in a multi-path channel system, the method comprising: searching for new path delays; searching for monitoring path delays; providing a correspondent path status for each of the new path delays and monitoring path delays; comparing new path delays with monitoring path delays in an order to determine near paths for each of the monitoring paths, wherein a difference between two near paths is less than a predetermined threshold; and replacing one of the monitoring path delays with a near path; characterized in that: the sorting and monitoring steps comprise sorting the new path delays and sorting the monitoring path delays according to the corresponding path statuses; the comparing step comprises comparing sorted new path delays with sorted monitoring path delays in an order to determine near paths for each of the monitoring paths.

## Description

This invention pertains in general to a wireless communications system, and, more particularly, to finger management and cell list management for a wireless communications system.

In a typical CDMA or WCDMA wireless communications system, a transmitted signal travels from a transmitter to a receiver over multiple paths. Prior to transmission, a base station multiplies the information signal intended for each of the mobile stations by a unique signature sequence, referred to as a pseudo-noise (PN) sequence. The signals for all subscriber mobile stations are then transmitted simultaneously by the base station. Upon receipt, each mobile station demodulates the received signal, the result of which is integrated to isolate the information signal intended for a particular mobile station from the other signals intended for other mobile stations. The signals intended for the other mobile stations appear as noise.

During transmission, each multi-path is considered a separate channel subject to interference effects such as fading and dispersion. In order to receive signals from multiple paths, the receiver demodulates the transmitted signal by combining the multi-path signals. Specifically, a CDMA or a WCDMA system employs a "rake" receiver, which demodulates a received signal using plural demodulation "fingers", each of which demodulates a signal component from a number of the channel paths. A typical rake receiver includes a plurality, from three to six, rake branches or "fingers," each of which is an independent receiver unit that assembles and demodulates one received multi-path assigned to the finger. The outputs of the rake fingers are combined to improve performance. Before the multi-path signals are combined, however, the delays of the multi-path signals must be ascertained.

To ascertain multi-path signal delays, a rake receiver operates in conjunction with a delay searcher and a plurality of delay trackers. The delay searcher conducts a "coarse" searching with a rough resolution so as to quickly analyze a received signal and ascertain the delays, which are then assigned to the rake fingers. In mobile communications, the channels may be subject to additional fading due to the motion of the receiver. The delay trackers therefore track the delays assigned by the searcher between channel searches. Thus, while the searcher looks over a wide range of delays, the trackers look for a smaller range surrounding the assigned delays.

An important consideration in multi-path searching is increasing path detection probability while minimizing path false-alarm probability. To this end, a quality finger management strategy is required. The finger management strategy may include finger assignment algorithm, path selection method, and threshold setting method.

The finger assignment algorithm keeps possible path candidates in a monitoring/tracking path list and adds to the list any new path having the strongest signal strength. Generally, the rake receiver fingers are assigned to the strongest channel multi-path signals. That is, a first finger is assigned to receive the strongest signal and a second finger is assigned to receive the next strongest signal. As received signal strength changes, the finger assignments are changed accordingly. Therefore, a path selection method affects the path detection probability and path false alarm probability directly.

A path tracking loop/path verification unit then tracks or monitors the path delays in the path list. The measure of multi-path strength is the received signal-to-interference ratio (RSSI), a measurement compared to predetermined lock and unlock thresholds. The signal-to-noise ratio of a rake receiver which uses maximal ratio to combine signals improves with each additional finger it combines, provided correct weighting coefficients are used.

A method to set a threshold for path selection, therefore, directly affects the quality of path selection. The threshold is for determination of path candidates. If the estimated parameter about a path, such as path strength, is over the threshold, this path is deemed a true candidate. The threshold setting method may be difficult to implement for different environments or conditions. For example, a threshold suitable for a low signal-to-noise ratio (SNR) signal is not necessarily suitable for a high SNR transmitted signal. A threshold designed for a deep-fading condition is not necessarily good to a normal condition with less fading.

An example is a constant false alarm rate (CFAR) detector. The principal of the CFAR detector is to provide a path selection threshold value for use in the path estimation such that values above the path selection threshold in the cross-correlation pattern are to be identified as path candidates. If the values fall below the path selection threshold, the signals are to be rejected and considered as noise. Depending on the value assigned to a threshold value, a certain probability of false alarm rate is obtained. Multiplying a predefined constant threshold factor, by the current measured noise level. creates a path selection threshold value that is used in a path selection unit to obtain a known, constant false alarm rate.

Putting in context the above, in a cellular mobile communication system, a user of a mobile station communicates with the system through base stations. Each base station has its own coverage area. A base station controls the communication between the system and the mobile station in its own coverage area. When a mobile station moves from one cell to another, the communication control eventually transits from the original base station to the new base station. The transition is for the mobile station to communicate with the base station, having better signal quality than the original base station. To successfully transit, also known as handover or handoff, from one base station to another, the measurement of the quality of neighbor cells is important. Thus, a cell list with cell information is provided. The management of the cell list is an issue in mobile communication because the cell quality information is based on the information of the cell list. Generally, the cell quality is determined by the strength of the signal. With the measured information, the cell list includes a cell quality ranking to determine potential candidate cells for cell handoff. Obviously, handoff can only be effective if the call is transferred to channels that provide adequate signal strength.

US A1 2005/0105599 discloses a method of path selection and method of finger assignment in a digital wireless communications system as defined in the precharacterising portions of claims 1 and 9.

WO A2 2004/084562 discloses methods for assigning methods for assigning multi-paths to rake receivers in a wireless communications system. GB A 2287858 and WOA2 98/33288 disclose hand-off methods in wireless communications systems.

In accordance with one another aspect, the invention provides a method of finger assignment in a multi-path channel system, as defined in claim 1.

The invention, will be better further described by way of example in conjunction with the appended drawings, in which:-
FIG. 1 is a block diagram of one embodiment of the present invention;
FIG. 2 is a flow diagram illustrating one embodiment of a method of finger assignment consistent with one embodiment of the present invention;
FIGS. 3 - 5 are flow diagrams illustrating embodiments of a path selection method consistent with the present invention;
FIGS. 6 - 7 are exemplary embodiments for setting a threshold value consistent with the method of the present invention;
FIGS. 8 - 9 are plots showing embodiments for cell list management of the present invention;
FIG. 10 is a flow diagram of an embodiment for cell list management consistent with one embodiment of the present invention; and
FIGS. 11-12 are examples of a cell list management method consistent with the present invention.

Reference will now be made in detail to the present embodiments of the invention, examples of which are illustrated in the accompanying drawings. Wherever possible, the same reference numbers will be used throughout the drawings to refer to the same or like parts.

In one aspect, the present invention is directed to an improvement in path detection probability and path false alarm probability. In a novel finger management strategy, the present invention sorts assigned path delays/monitoring delays and the newly searched path delays by parameters that are related to the path detection probability performance and path false alarm performance, such as path strength, path appearance elapsed time and path level crossing rate. Prioritized monitoring delays and newly searched path delays are compared to determine near new delays to one of the monitoring delays. A monitoring delay is assigned a near delay of a newly searched path delay when the difference between the newly searched path delay and the monitoring delay is less than a predetermined threshold. In the event that there is more than one near delays for a monitoring delay, the one with a higher priority is assigned to the monitoring delay.

In another aspect of the present invention, a method of path selection determines possible path candidates by judging the path statuses of the monitoring or searching paths. The path statuses depend on the parameters that are related to the path detection probability performance and path false alarm performance, such as path strength, path appearance elapsed time and path level crossing rate.

Another aspect of the present invention is directed to the setting of a threshold value for path candidate selection. A plurality of thresholds are set for parameters that are related to the path detection probability performance and path false alarm performance, such as path strength, path appearance elapsed time and path level crossing rate. A path compared with the plural thresholds is granted a particular weighting according to the region in which the path is located. The granted weighting is used to update the path status. Furthermore, a fuzzy region, or region of uncertainty, surrounds each threshold to address any instantaneous fluctuations in the threshold. Furthermore, the thresholds are set to be different from each other by a preserved hysteresis region to prevent two thresholds from being too close in values.

Additionally, the present invention is directed to a method of managing a cell list whereby bad quality cells are removed from the cell list. Once removed, the receiver would not waste computational powers to measure and demodulate bad quality cells. The method of the present invention takes into consideration the cell appearance frequency to determine the quality of cells. An example of the cell appearance frequency is the elapsed time that a receiver cannot detect any path from the monitoring cell. If the elapsed time is over a pre-determined threshold, the cell at issue is deemed a bad quality cell and is removed from the cell list. In one aspect, the cell list is ranked by the cell appearance frequency.

The cell list management of the present invention also takes into consideration cell quality estimation, such as signal strength and cell appearance frequency. An example of cell appearance frequency calculated from the elapsed time from the last time a cell can be found at least one path in the receiver. The cell quality estimation is then compared with plural thresholds. For different thresholds, the monitoring cell is granted different weight depending on the region in which the cell is located. A cell quality parameter for the monitoring cell is updated according to the granted weighting. The cell list is then updated according to the measure of cell quality of the monitoring cells.

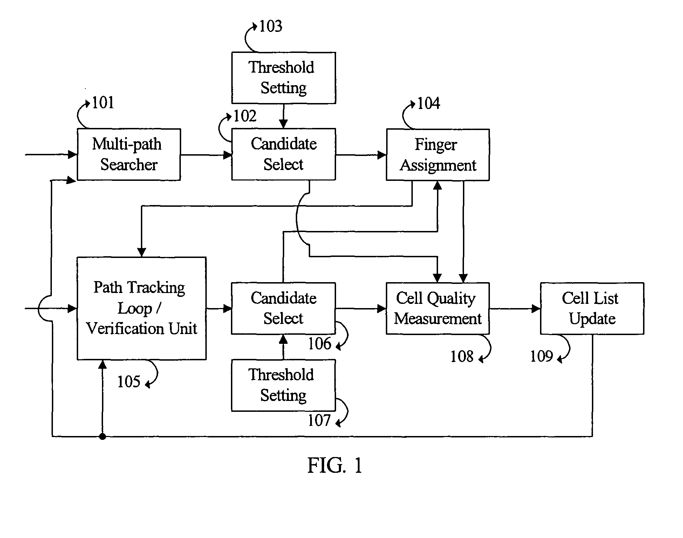

FIG. 1 is a top-level block diagram of one embodiment of the present invention. Referring to FIG. 1, a general flow diagram of finger management and cell list management are depicted. The system and method of the present invention includes a multi-path searcher 101 for conducting coarse multi-path searches. Multi-path searcher 101 receives an input (not labeled) and an updated cell list from cell list update unit 109. A candidate select unit 102 is coupled to receive input from multi-path searcher 101. Candidate select units 102 and 106 determine possible path candidates according to a particular path selection method.

A path tracking loop/verification unit 105 received inputs from a finger assignment unit 104 and an updated cell list from cell list update 109. Path tracking loop/verification unit 105 functions to monitor paths and conduct fine path delay tracking. Two threshold setting units 103 and 107 set the thresholds for candidate selection in accordance with a particular threshold setting method. Finger assignment unit 104 receives possible path candidates from candidate select units 102 and 106, and combines the newly searched path delays from multi-path searcher 101 and other path information to generate a path list for the next path monitoring to path tracking/verification unit 105.

Finger assignment unit 104 also provides finger assignment information to a cell quality measurement unit 108. Together with the information from candidate selection units 102 and 106, cell quality measurement unit 108 provides a cell quality measurement. Cell list update unit 109 then updates and renews the information in the cell list according to the information from cell quality measurement unit 108.

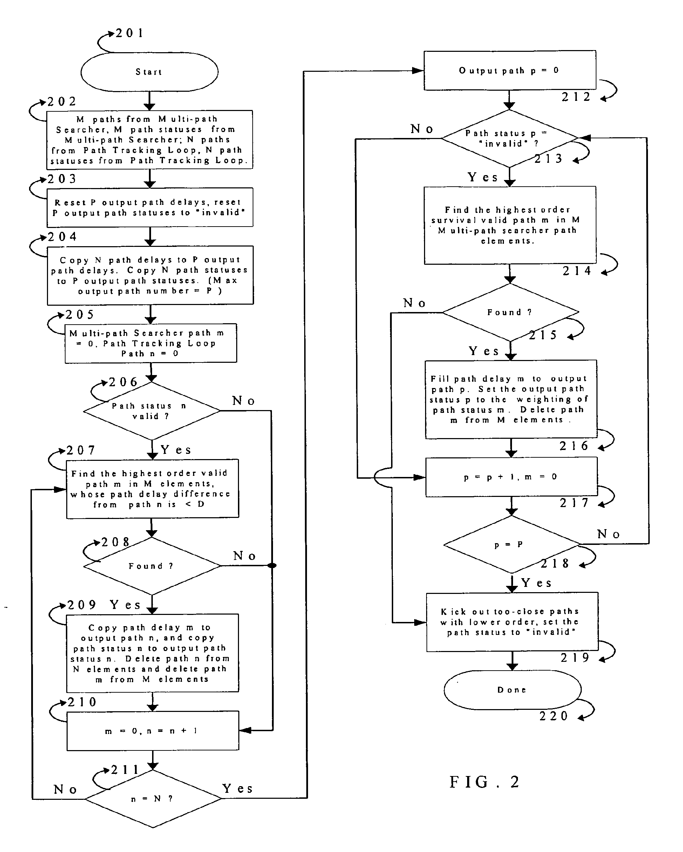

FIG. 2 is an embodiment of finger assignment method consistent with one embodiment of the present invention. Referring to FIG. 2, the method begins at step 201. At step 202, M newly searched path delays from multi-path searcher, such as multi-path searcher 101 in FIG. 1, and N monitoring path delays in path tracking/verification unit, such as path tracking/verification unit 105 in FIG. 1, are provided. There is a corresponding path status for each path delay. The path status is related to path detection probability and path false alarm probability performance parameters, such as path strength, path level crossing rate, and path appearance elapsed time. The path level crossing rate is the rate that the path strength passes through a predetermined threshold. The path appearance elapsed time is the elapsed time from the last time that the same path is detected. The path status could be taken as a confidence evaluation parameter of a possible path candidate. The M newly searched path delays and the N monitoring path delays are first sorted according to path statuses.

Referring to step 203, the expected P output path delays and the next monitoring path list are reset. The corresponding path statuses are reset as "invalid" paths. To keep the monitoring path delays, the N monitoring path delays are first copied to P output path delays at step 204. The P output path statuses also inherit the N path statuses. From steps 205 to 212, the M newly found path delays are compared with the N monitoring path delays to determine the near paths for each of the N monitoring paths. Two paths are determined as near paths if the distance between the two paths is less than a predetermined threshold. If there is any near path for one of the N monitoring paths, the monitoring path delay is replaced by the near path delay, which is newly found in the multi-path searcher. If there is more than one near path delays for a monitoring path delay, the higher-order near path delay is picked to replace the monitoring path delay. The path replacement is performed on the P output path delays, which are copies of the N monitoring path delays. The output path statuses remain the same, which means they are not replaced by the path statuses of the newly searched path delays. The aforementioned steps may be implemented in any known controller coupled to a delay searcher and delay trackers.

After the path replacement is complete, steps 213 to 218 fill the "invalid" output path delays with the remaining, non-replaced, path delays in the M newly searched paths. The remaining path delays are picked by order, and the path statuses of the picked survival path delays are also copied to the output path statuses. To ensure the output path delays differ from each other by at least greater than a predetermined threshold, the paths with lower priorities are eliminated, or kicked out at step 219. The path statuses of the eliminated paths are set as "invalid".

With the prioritized finger assignment as set forth in an exemplary method shown in conjunction with FIG. 2, the path detection probability and the path false alarm probability performance are improved.

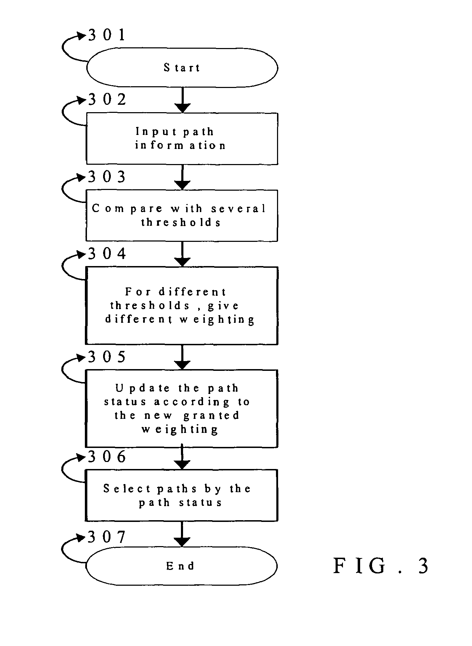

FIG. 3 is a flow diagram of an embodiment of path selection. Referring to FIG. 3, the method begins at step 301 by inputting path information at step 302. The path information includes path delays, corresponding path statuses, and corresponding path parameters for comparison purposes. The path parameters are related to the path detection probability and the path false alarm probability performance. The path parameters may include path strengths, path level crossing rates and path appearance elapsed time. At steps 303 and 304, the parameters are compared with plural thresholds, and the paths are granted different weightings depending on the threshold levels. According to the granted weighting, the corresponding path status is updated at step 305, and the candidate paths are selected according to the path statuses at step 306.

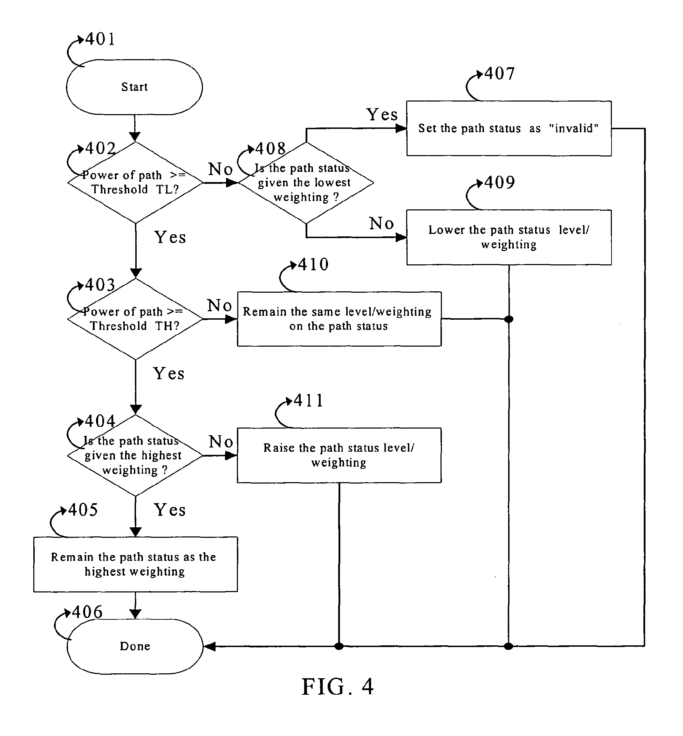

FIG. 4 is a flow diagram of one embodiment for threshold comparison steps 303 and 304 in FIG. 3. Referring to FIG. 4, the parameter for comparison depicted herein is path strength. If the path strength is not greater than a predetermined threshold TL at step 402, the method goes to step 408 to check if the path status is in the lowest level or weighting. The terms level and weighting are interchangeable as appropriate under the circumstances of this embodiment. In this example, the path status is classified into several levels or weightings. If the path status is in the lowest level, the path status is set to "invalid" as in step 407. If the path status is not in the lowest level, the path status level or weighting is lowered at step 409.

However, if the path strength is greater than threshold TL, the path strength is then compared with another threshold TH at step 403. If the path strength is not greater than threshold TH, the path status remains the same at step 410. If the path strength is greater that threshold TH, the path status is verified whether it is at the highest level as in step 404. If the path status is not at the highest level or weighting, the path status is increased or raised at step 411. If the path status is at the highest level or weighting, the path status remains the highest level at step 405.

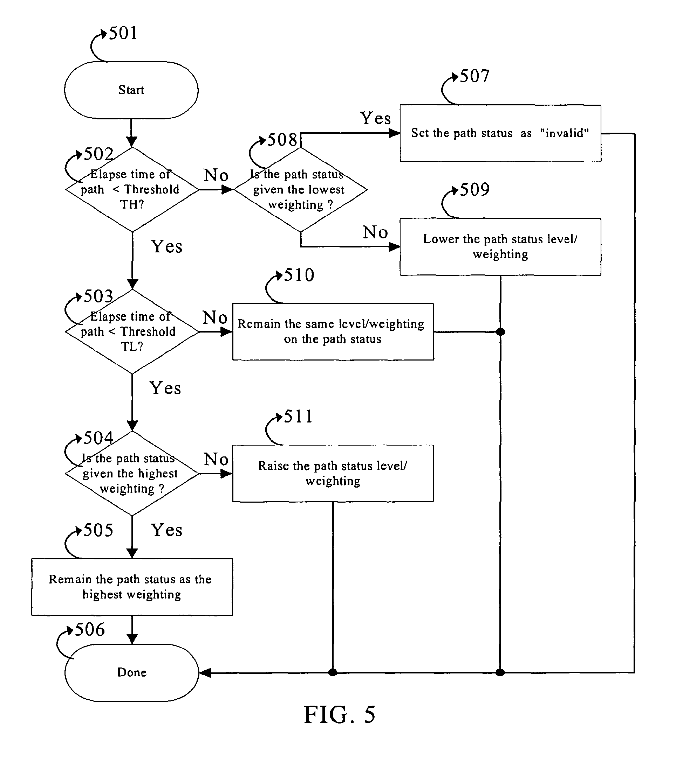

FIG. 5 is a flow diagram of another embodiment for threshold comparison steps 303 and 304 in FIG. 3. Referring to FIG. 5, the parameter for comparison herein is path appearance elapsed time. If the elapsed time is not shorter than a predetermined threshold TH at step 502, the method determines if the path status is in the lowest weighting or level at step 508. The terms level and weighting are interchangeable as appropriate under the circumstances of this embodiment. In this example, the path status is classified into several levels. If the path status is at the lowest level, the path status is set to "invalid" at step 507. If the path status is not at the lowest level, the path status level or weighting is lowered at step 509.

However, if the elapsed time is shorter than threshold TH, the elapsed time is compared with another threshold TL at step 503. If the elapsed time is not shorter than threshold TL, the path status remains the same as before at step 510. If the elapsed time is shorter that threshold TL, the path status is checked to determine if it is at the highest level at step 504. If the path status is not at the highest level, the path status is raised or increased at step 511. If the path status is at the highest level, the path status remains the highest level at step 505.

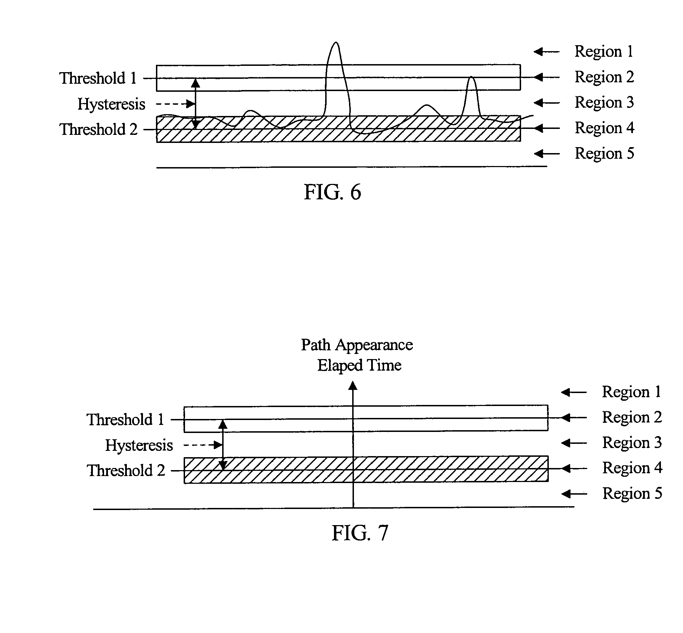

FIG. 6 is an example for setting a threshold value. Referring to FIG. 6, the thresholds for comparing the received power delay profile or channel impulse response are shown. The thresholds may be derived from the power delay profile or other information, such as path strength, noise level, or interference level. A path compared with the plural thresholds is granted weighting according to the region in which the path is located. The granted weighting is used to update the path status. Furthermore, a fuzzy region, or region of uncertainty, surrounds each threshold to address any instantaneous fluctuations in the threshold. Furthermore, the thresholds are set to be different from each other for a preserved hysteresis region to prevent two thresholds from being too close in values.

FIG. 7 is another example for setting a threshold value. Referring to FIG. 7, the thresholds are for comparing the path appearance elapsed time. Similar to FIG. 6, there is a fuzzy region around each threshold as the shadow areas in the figure. Between thresholds, there is a hysteresis region to prevent thresholds from getting too close in values. Each region again is assigned its corresponding weighting.

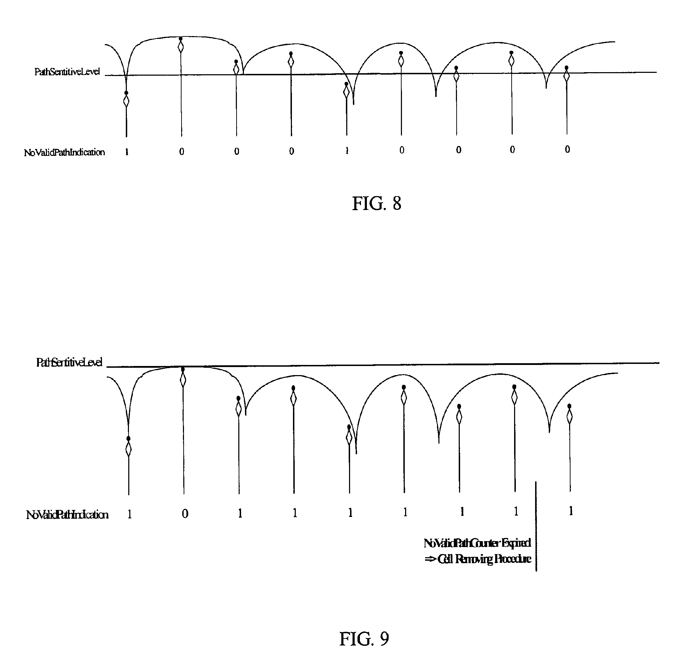

FIG. 8 is a plot showing an exemplary cell appearance frequency for a high SNR cell. Referring to FIG. 8, an indication "NoValidPathIndication" indicates that there is no path passing over the predetermined threshold, and the "PathSensitiveLevel" indicates the predetermined threshold. If the elapsed time of "NoValidPathIndication" is longer than a predetermined threshold, the cell being measured is deemed a bad quality cell. This cell is then removed from the cell list. Here, the elapsed time has not expired and therefore the cell being measured is not a bad cell.

FIG. 9 is a plot showing an exemplary cell appearance frequency for a low SNR cell. Referring to FIG. 9, because the elapsed time is longer than the expiring time, the cell being measured is deemed a bad quality cell, and is therefore removed from the cell list.

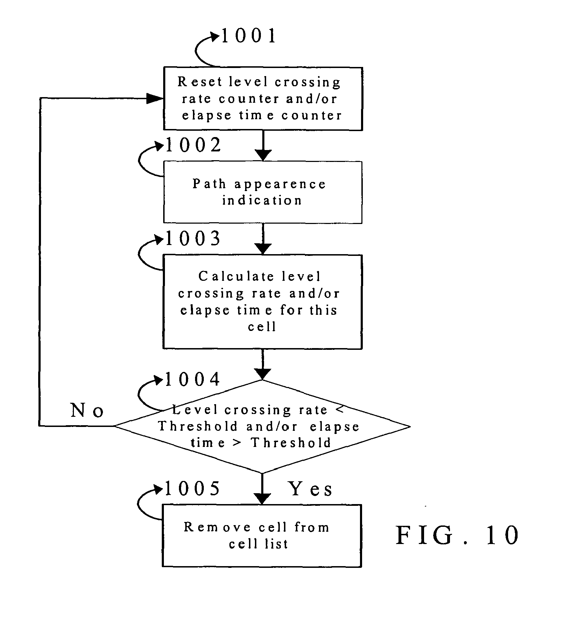

FIG. 10 is a flow diagram of an embodiment for cell list management consistent with one embodiment of the present invention. Referring to FIG. 10, a level crossing rate counter or elapsed time counter, as appropriate, is reset at step 1001. A path appearance indicated is provided at step 1002. A cell quality measured using cell appearance frequency is calculated at step 1003. In this embodiment, the cell appearance frequency is expressed as the signal strength level crossing rate and/or the elapsed time since the last time the monitoring cell could be detected at least one cell at the receiver. The cell quality measurement is compared with a predetermined threshold at step 1004 to decide whether the monitoring cell is a bad quality cell. A bad quality cell is one whose level crossing rate is smaller than the predetermined threshold or if the elapsed time is greater than the predetermined threshold. If it is a bad quality cell, this cell is removed from the cell list at step 1005.

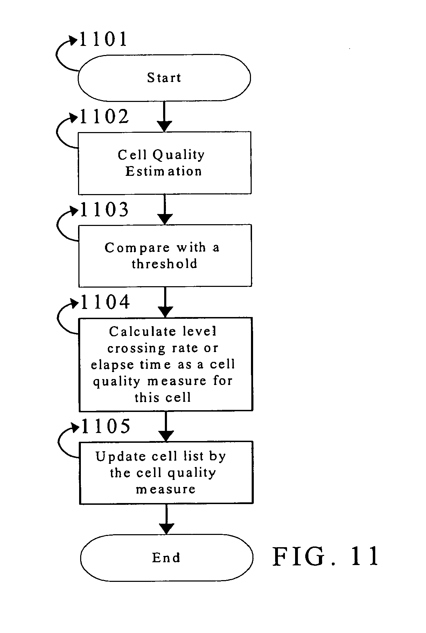

FIG. 11 is another embodiment of cell list management consistent with the present invention. In this embodiment, cell quality estimation is calculated at step 1102. The cell quality estimation could be, for example, the signal strength of the monitoring cell. The cell quality estimation is compared with a predetermined threshold at steps 1103 and 1104 to calculate a level crossing rate and/or an elapsed time as a cell quality measurement. The level crossing rate is the rate that the cell quality estimation passes through a predetermined threshold. The elapsed time may be, for example, the consecutive time that the cell quality estimation is under a predetermined threshold. The cell list is then updated according to the cell quality measurement at step 1105.

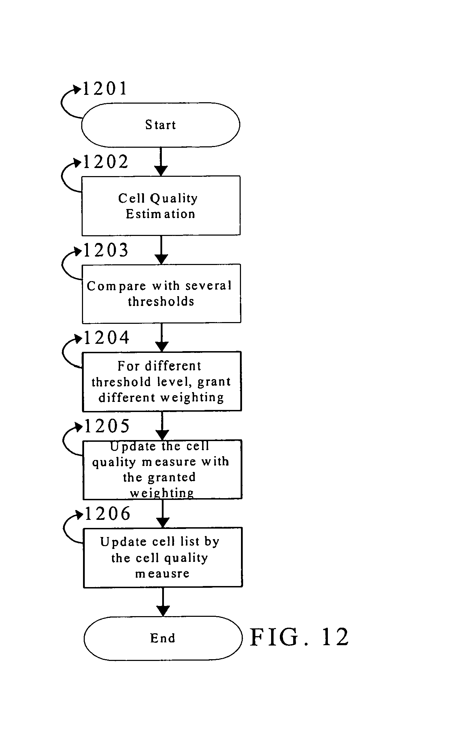

FIG. 12 is a flow diagram of another embodiment of cell list management. Referring to FIG. 12, cell quality estimation is calculated at step 1202. The cell quality estimation may be, for example, the signal strength of the monitoring cell. The cell quality estimation is then compared with plural predetermined thresholds at step 1203. The monitoring cell is granted different weightings according to the compared results at step 1204. A cell quality measurement parameter is then updated based on the granted weighting at step 1205. The cell list is updated according to the cell quality measurement of the cells at step 1206.

The parent application EP05257535.4 included the following claims whose text is repeated here as content of this application in order to provide basis under EPC Art. 123(2) for further amendment of this application or for further divisionals. These are not claims of this divisional application:- 1. A method of path selection in a multi-path channel communications system, comprising: providing path information including at least path parameters and path statuses setting a plurality of thresholds for the path parameters; comparing the path parameters to the thresholds corresponding to the path parameters; assigning a weighting to the path parameters depending upon comparison with the thresholds; updating the path statuses according to the assigned weighting to the parameters; and selecting at least one candidate path according to the updated path statuses. 2. The method of claim 1, wherein the path parameter relates to path detection probability and path false alarm probability performance. 3. The method of claim 1, wherein the path parameter information includes at least one of path strength, path level crossing rate and path appearance elapsed time. 4. The method of claim 1, wherein each of the thresholds includes a fuzzy region to address instantaneous fluctuations. 5. The method of claim 1, wherein the thresholds are set to be different from each other for a preserved hysteresis region. 6. The method of claim 3, further comprising: determining whether the path strength is not greater than a first predetermined threshold; determining whether the path status is a lowest level if the path strength is not greater than the first predetermined threshold; setting the path status to "invalid" if the path status is in the lowest level; and lowering a level of the path status if the path status is not in the lowest level. 7. The method of claim 6, further comprising: comparing the path strength to a second predetermined threshold if the path strength is greater than a second predetermined threshold; determining whether the path status is a highest level if the path strength is greater than the second predetermined threshold; increasing a level of the path status if the path status is not at the highest level; and maintaining the path status if the path status is in the highest level. 8. The method of claim 3, further comprising: determining whether the path appearance elapsed time is not shorter than a first predetermined threshold; determining whether the path appearance elapsed time is a lowest level if the path appearance elapsed time is not shorter than the first predetermined threshold; setting the path status to "invalid" if the path status is in the lowest level; and lowering a level of the path status if the path status is not in the lowest level. 9. The method of claim 8, further comprising: comparing the path appearance elapsed time to a second predetermined threshold if the path appearance elapsed time is shorter than a second predetermined threshold; determining whether the path status is a highest level if the path appearance elapsed time is shorter than the second predetermined threshold; increasing a level of the path status if the path status is not at the highest level; and maintaining the path status if the path status is in the highest level. 10. A method of processing signals in a multi-path channel communications system, comprising: demodulating a received signal by combining values from a plurality of channel paths; channel searching on the received signal to detect new delays in the multi-path channel; tracking the select assigned delays; and replacing one of the select assigned delays with a new delay if the select assigned delay is within a predetermined threshold of the new delay. 11. The method of claim 10, further comprising comparing each of the select assigned delays to each one of new delays, and determining a near new delay to the select assigned delay. 12. The method of claim 11, further comprising determining whether a difference between the near new delay and the select assigned delay is less than the predetermined threshold. 13.The method of claim 11, further comprising prioritizing the select assigned delays and the new delays before the comparing step. 14. A method of processing a received signal in a multi-path channel system, comprising: demodulating the received signal for each of plural channel paths utilizing select assigned delays; channel searching to detect new delays; and replacing one of the select assigned delays with a new delay if the select assigned delay is within a predetermined threshold of the new delay. 15. The method of claim 14, further comprising comparing each of the select assigned delays to each of new delays to determine a near new delay to one of the select assigned delay. 16. The method of claim 15, wherein a near new delay is for a same path as the select assigned delay if the near new delay differs from the select assigned delay by less than the predetermined threshold. 17. The method of claim 15, wherein a highest-prioritized new delay of the near new delay is chosen to replace the select assigned delay under a specific condition. 18. The method of claim 14, wherein the select assigned delays are prioritized with path statuses determined by parameters such as path strength and path appearance elapsed time. 19. A method for determining path statuses and selecting paths for a received signal in a multi-path channel system, comprising: demodulating the received signal for each of plural channel paths utilizing select assigned delays; channel searching to detect new delays; determining the path statuses according to path performance-related parameters including one of path strength, path appearance and path validity information; and selecting at least one path according to the determined path statuses. 20. The method of claim 19, wherein the path performance-related parameters include at least one of path strength, path appearance elapsed time, valid or invalid paths indication, level crossing rate and multi-weightings. 21. A method of finger assignment in a multi-path channel system, comprising: searching for new path delays; searching for monitoring path delays; providing a correspondent path status for each of the new path delays and monitoring path delays; sorting the new path delays and monitoring path delays according to the corresponding path status; comparing the new path delays with the monitoring path delays to determine near paths for each of the monitoring paths, wherein a difference between two near paths is less than a predetermined threshold; and replacing one of the monitoring path delays with a near path. 22. The method of claim 21, wherein the path status relates to path detection probability and path false alarm probability performance. 23. The method of claim 22, wherein the status includes one of path strength, path level crossing rate, and path appearance elapsed time. 24. The method of claim 21, further comprising copying the monitoring path delays to output path delays. 25. The method of claim 21, wherein if there is more than one near path delays for a monitoring path delay, a higher-order near path delay replaces the monitoring path delay. 26. The method of claim 21, further comprising resetting the output path delays of non-replaced path delays in the new path delays, wherein output path delays with lower priorities are eliminated. 27. A method of signal processing in a cellular telecommunications system comprising a plurality of mobile stations and a plurality of cells transmitting and receiving on one or more channels, comprising: comparing each of the cells to a first predetermined threshold; calculating for each of the cells one of frequency crossing rate and elapsed time of passing the predetermined threshold as the cell quality measurement; creating an ordered list of the cells according to the cell quality measurement of cells; and prioritizing the list including determining if any of the cells include have a cell quality measurement above a second predetermined threshold, and removing from the list a cell having the cell quality measurement below the second predetermined threshold. 28. A method of signal processing in a cellular telecommunications system comprising a plurality of mobile stations and a plurality of cells transmitting and receiving on one or more channels, comprising: determining a path appearance frequency; measuring a cell quality using the cell appearance frequency, wherein cell appearance frequency is one of a signal strength level crossing rate and the elapsed time since a last time a monitoring cell could be detected; comparing the cell quality measurement a predetermined threshold; determining whether the monitoring cell whose level crossing rate is smaller than the predetermined threshold or if the elapsed time is greater than the predetermined threshold; removing the monitoring cell if its level crossing rate is smaller than a first predetermined threshold; and removing the monitoring cell if its elapsed time is greater than a second predetermined threshold. 29. The method of 28, further comprising resetting a level crossing rate counter. 30. The method of 28, further comprising resetting an elapsed time counter. 31. A method of signal processing in a cellular telecommunications system comprising a plurality of mobile stations and a plurality of cells transmitting and receiving on one or more channels, comprising: calculating a cell quality estimation; comparing the cell quality estimation with a first predetermined threshold to calculate one of a level crossing rate and an elapsed time as a cell quality measurement; updating a cell list according to the cell quality measurement. 32. The method of claim 31, wherein the cell quality estimation is signal strength of a monitoring cell. 33. The method of claim 32, further comprising removing the monitoring cell from the cell list if its elapsed time is greater than a second predetermined threshold. 34. The method of claim 31, further comprising assigning weightings after the comparing step to a monitoring cell.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

It will be appreciated by those skilled in the art that changes could be made to the embodiments described above without departing from the inventive concept thereof as defined by the appended claims.

## Claims

1. A method of finger assignment in a multi-path channel system, the method comprising:
searching for new path delays;
searching for monitoring path delays;
providing a correspondent path status for each of the new path delays and monitoring path delays;
comparing new path delays with monitoring path delays in an order to determine near paths for each of the monitoring paths, wherein a difference between two near paths is less than a predetermined threshold; and
replacing one of the monitoring path delays with a near path;
**characterized in that:**
the sorting and monitoring steps comprise sorting the new path delays and sorting the monitoring path delays according to the corresponding path statuses;
the comparing step comprises comparing sorted new path delays with sorted monitoring path delays in an order to determine near paths for each of the monitoring paths.

2. The method of claim 1, wherein the path statuses relate to path detection probability and path false alarm probability performance.

3. The method of claim 2, wherein each of the path statuses includes one of path strength, path level crossing rate, and path appearance elapsed time.

4. The method of claim 1, further comprising copying the monitoring path delays to output path delays.

5. The method of claim 1, wherein if there is more than one near path delays for a monitoring path delay, a higher-order near path delay replaces the monitoring path delay.

6. The method of claim 1, further comprising resetting the output path delays of non-replaced path delays in the new path delays, wherein output path delays with lower priorities are eliminated.
